# EUROPÄISCHE PATENTANMELDUNG

(11) **EP 4 276 041 A1**
(43) Veröffentlichungstag der Anmeldung: **15.11.2023**
(21) Anmeldenummer: 23172253.9
(22) Anmeldetag: 09.05.2023
(51) Int. Cl.: B65G 1/04, B65G 1/12, B65G 47/51

(54) **SORTIERVORRICHTUNG ZUM SORTIEREN VON STÜCKGÜTERN IN ENDSTELLEN**

(30) Priorität: 10.05.2022 DE 102022111696
(71) Anmelder: Deutsche Post AG, 53113 Bonn (DE)
(72) Erfinder: Pruski, Matthäus, 53844 Troisdorf (DE)
(74) Vertreter: Michalski Hüttermann & Partner Patentanwälte mbB

(57) **Zusammenfassung**

Gegenstand der Erfindung ist eine Sortiervorrichtung (10) zum Sortieren von Stückgütern in Endstellen (12) umfassend
- mehrere übereinander angeordnete horizontale als Förderbänder ausgestaltete Förderer (14) zum Fördern der Stückgüter in einem Rundkurs, wobei die Förderer (14) dazu ausgestaltet sind, die Stückgüter senkrecht (18) zur Förderrichtung des Rundkurses (16) zu bewegen, und
- mehrere Endstellen (12), wobei die Endstellen (12) entlang der Förderer (14) derart angeordnet sind, dass die Stückgüter durch die Bewegung senkrecht (18) zur Förderrichtung (16) in die Endstellen (12) transportierbar sind,
wobei der Transport der Stückgüter von dem Förderer (14) in die Endstelle (12) lediglich durch den Förderer (14) erfolgt.

Die Erfindung betrifft zudem die Verwendung der obigen Sortiervorrichtung (10) zum Sortieren der Stückgüter in die Endstellen (12).

## Beschreibung

### Technisches Gebiet

Die Erfindung betrifft eine Sortiervorrichtung zum Sortieren von Stückgütern in Endstellen.

Zudem betrifft die Erfindung die Verwendung der obigen Vorrichtung zum Sortieren der Stückgüter in die Endstellen.

### Hintergrund der Erfindung

Infolge von E-Commerce und Online-Versandhandelsangeboten hat sich die Anzahl von Transportgüter, und insbesondere die Anzahl von kleinen bis mittelgroßen Umschlägen und Päckchen, signifikant erhöht.

Die Sortierung dieser Kleinstartikel beispielsweise gemäß einer Zustelladresse oder Postleitzahl auf entsprechende Endstellen erfolgt oftmals manuell, was allerdings personalintensiv und teuer ist. Zudem kann die Sortiergeschwindigkeit nicht beliebig gesteigert werden und der Sortierprozess ist fehleranfällig.

Weiterhin ist bekannt, Roboterarme zur Sortierung der Stückgüter zu verwenden. So beschreibt die EP 3 593 913 A1 eine Sortieranlage für Pakete, bei der ein Sortiermechanismus als Roboterarm ausgestaltet ist, und dazu eingerichtet ist, eine Vielzahl von Paketen gemäß einer paketbezogenen Sortierinformation zu sortieren.

Vorteilhaft an manueller Sortierung wie auch an einem Roboterarm ist, dass zum Sortieren wenig Platz beansprucht wird und der Sortierprozess an unterschiedlichen Orten aufgrund der einfachen Transportierbarkeit des Roboterarms und/oder der Sortiermitarbeiter durchgeführt werden kann. Nachteilig ist allerdings die begrenzte Geschwindigkeit der Bewegung des Roboterarmes, was sich auch auf die Effizienz des Sortierprozesses negativ auswirkt. Typische Sortierleistungen von Roboterarmen liegen im Bereich von 750 Stückgütern pro Stunde, was gleichbedeutend ist mit einer Bearbeitungszeit von 4,8 Sekunden pro Stückgut.

### Beschreibung der Erfindung

Ausgehend von dieser Situation ist es eine Aufgabe der vorliegenden Erfindung, eine Sortiervorrichtung bereitzustellen, die bei einem geringen Platzbedarf eine hohe Sortierleistung erzielt.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch eine Sortiervorrichtung zum Sortieren von Stückgütern in Endstellen umfassend
- mehrere übereinander angeordnete horizontale als Förderbänder ausgestaltete Förderer zum Fördern der Stückgüter in einem Rundkurs, wobei die Förderer dazu ausgestaltet sind, die Stückgüter senkrecht zur Förderrichtung des Rundkurses zu bewegen, und
- mehrere Endstellen, wobei die Endstellen entlang der Förderer derart angeordnet sind, dass die Stückgüter durch die Bewegung senkrecht zur Förderrichtung in die Endstellen transportierbar sind,
wobei der Transport der Stückgüter von dem Förderer in die Endstelle lediglich durch den Förderer erfolgt, gelöst.

Ein Aspekt der Erfindung liegt darin, dass zum Sortieren mehrere horizontale Förderer verwendet werden, wobei die Förderer dazu ausgestaltet sind, die Stückgüter in einem Rundkurs zu fördern und die Stückgüter senkrecht zur Förderrichtung des Rundkurses zu bewegen. Da die Endstellen entlang der Förderer angeordnet sind, können die Stückgüter von den Förderern direkt in die jeweiligen Endstellen befördert werden. Der Transport der Stückgüter von dem Förderer in die jeweilige Endstelle erfolgt alleine durch den Förderer - also bevorzugt ohne dass ein weiteres vom Förderer unabhängiges Gerät, wie ein Handlinggerät, Verwendung findet.

Insbesondere ist vorgesehen, dass die mehreren Förderer übereinander angeordnete sind. Bevorzugt ist auch vorgesehen, dass die Endstellen übereinander angeordnet sind. In anderen Worten sind also bevorzugt mehrere Ebenen an Förderern mit entsprechenden Endstellen zum Sortieren der Stückgüter in die Endstellen vorgesehen. Die übereinander angeordneten Förderer führen dazu, dass die Sortiervorrichtung sehr wenig Platz beansprucht, insbesondere im Hinblick auf die Standfläche. Zudem sind die Förderer im Vergleich zu einem Roboterarm sehr viel schneller, so dass mittels der Förderer eine effiziente Sortierung der Stückgüter in die jeweiligen Endstellen möglich ist. Durch die Förderer kann also in anderen Worten ein kontinuierlicher Stückgutstrom zum Sortieren bereitgestellt werden, so dass weitaus höhere Sortierleistungen erreicht werden können als durch manuelle Sortierung oder durch Sortierung mittels eines Roboterarmes.

Die Endstellen sind bevorzugt gleichmäßig entlang des als Rundkurs ausgestalteten Förderers angeordnet. Dies weist den Vorteil auf, dass zu einem gegebenen Zeitpunkt grundsätzlich nicht nur ein Stückgut vom Förderer in die entsprechende Endstelle befördere werden kann, sondern bei günstiger Lage der Stückgüter mehrere Stückgüter zeitgleich in ihre entsprechenden Endstellen befördert werden können, da die Stückgüter gleichmäßig auf dem Förderer verteilt sind. Somit wird eine hohe Sortiereffizienz erreicht.

Die Stückgüter sind bevorzugt als Kleinstartikel, kleine bis mittelgroße Umschläge, Flyer und/oder Päckchen ausgestaltet. Bevorzugt weist das Stückgut seitliche Abmessungen von nicht mehr als 480 mm auf und/oder ein Gewicht von < 10 kg. Besonders bevorzugt ist eine Länge des Stückguts ≤ 480 mm, eine Breite des Stückguts ≤ 380 mm und/oder eine Höhe des Stückguts ≤ 150 mm. Weiter bevorzugt ist eine Länge des Stückguts ≥ 140 mm, eine Breite des Stückguts ≥ 125 mm und/oder eine Höhe des Stückguts ≥ 0,5 mm. Das Gewicht des Stückguts ist zudem bevorzugt ≥ 0,1 kg.

Der Förderer ist ein horizontaler Förderer, was vorliegend bedeutet, dass ein Normalenvektor einer Förderfläche des Förderers über den gesamten Rundkurs des Förderers im Raum nach oben weist, und nicht wie bei einem vertikalen Förderer zur Hälfte im Raum nach unten weist. Zudem ist der Förderer dazu ausgestaltet, die Stückgüter senkrecht zur Transportrichtung des Rundkurses zu bewegen. Diesbezüglich ist bevorzugt vorgesehen, dass der Förderer Ausschleuseinheiten umfasst, die dazu ausgestaltet sind, die Stückgüter senkrecht zur Transportrichtung des Rundkurses zu bewegen und in die entlang des Förderers angeordneten Endstellen zu befördern. Der Förderer ist als Förderband ausgestaltet und besonders bevorzugt als Quergurtsorter, Kippschalensorter, oder Schuhsorter. Bevorzugt weist der Förderer einen Durchsatz von wenigstens 750 Stückgüter pro Stunde auf.

In Zusammenhang mit der Form des Rundkurses ist gemäß einer bevorzugten Weiterbildung der Erfindung vorgesehen, dass der Rundkurs im Wesentlichen als regelmäßiges Polygon oder als Kreis ausgestaltet ist. Im Wesentlichen als regelmäßiges Polygon ausgestaltet bedeutet vorliegend, dass die Ecken des Polygons abgerundet sind, was für die Förderung der Stückgüter vorteilhaft ist. Der Rundkurs kann also beispielsweise quadratisch, regemäßig sechseckig, oder regelmäßig achteckig ausgestattet sein. Besonders bevorzugt ist der Rundkurs kreisförmig. Regelmäßige Polygone und insbesondere die Kreisform, sind sehr platzsparend, so dass die Sortiervorrichtung auch bei engen Platzverhältnissen - beispielsweise in einem Flughafen - aufgestellt werden kann. Die Kreisform weist zudem den Vorteil auf, dass die Krümmung über den gesamten Rundkurs gleichbleibend ist, so dass ein stabiler Transport - ohne plötzliche Richtungswechsel - der Stückgüter entlang des Rundkurses einfach möglich ist. Zudem stellt die Kreisform die kürzeste Strecke dar, so dass eine hohe Sortiergeschwindigkeit ermöglicht wird. Ebenfalls kann durch Veränderung des Durchmessers des kreisförmig ausgestalteten Rundkurses, die Anzahl an Endstellen auf einfache Weise verändert und den Gegebenheiten angepasst werden.

Bei einer Kreisform - bei dem der Förderer auch als Kreisförderer bezeichnet wird - ist also bevorzugt vorgesehen, dass der Förderer dazu ausgestaltet ist, die Stückgüter in einer Kreisform - also in Tangentialrichtung - zu fördern und zudem dazu ausgestaltet ist, die Stückgüter zwecks Ausschleusung in radialer Richtung zu bewegen.

Gemäß einer weiteren bevorzugten Weiterbildung ist in Bezug zu den Förderern bevorzugt vorgesehen, dass die Förderer deckungsgleich übereinander angeordnet sind. In anderen Worten verläuft der Rundkurs eines Förderers in einer Ebene also bevorzugt genau über dem Rundkurs eines Förderers in einer darunterliegenden Ebene und/oder genau unter dem Rundkurs eines Förderers in einer darüberliegenden Ebene. Derart sind bevorzugt auch die Endstellen, die entlang der Förderer angeordnet sind auch bevorzugt übereinander angeordnet. Somit weist die gesamte Sortiervorrichtung bevorzugt einen kompakten platzsparenden Aufbau auf. Grundsätzlich kann die Förderrichtung der übereinander angeordneten Förderer zueinander verschieden sein, also beispielsweise, dass ein erster Förderer die Stückgüter im Uhrzeigersinn entlang des Rundkurses fördert und ein darüber angeordneter Förderer gegen den Uhrzeigersinn. Bevorzugt ist aber vorgesehen, dass die übereinander angeordneten Förderer die gleiche Förderrichtung aufweisen. Dies vereinfacht den Aufbau der Sortiervorrichtung.

Bevorzugt nimmt die Sortiervorrichtung eine Standfläche von nicht mehr als 50 m² ein. Bei einem kreisförmigen Förderer können bei einer solchen Standfläche typischerweise 22 Endstellen pro Förderer entlang des Förderers angeordnet werden. Wenn beispielsweise vier Förderer übereinander angeordnet werden, kann derart also eine Sortiervorrichtung zum Sortieren von Stückgütern in bis zu 88 Endstellen bereitgestellt werden.

Gemäß einer weiteren bevorzugten Weiterbildung der Erfindung umfasst die Sortiervorrichtung ein Zuführungstransportmittel zum Herstellen eines Zuführungsstückgutstroms zu wenigstens einem Förderer. Das Zuführungstransportmittel ist also bevorzugt dazu ausgestaltet, die Stückgüter auf die Förderer zu zuführen. Beim Zuführungstransportmittel handelt es sich beispielsweise um ein Fließband. Da die Stückgüter beim Sortieren von der Sortiervorrichtung innerhalb des Rundkurses des Förderers in die jeweilige Endstelle bewegt werden, ist spätestens nach einem Durchlauf des Rundkurses wieder Platz auf dem Förderer vorhanden, um ein weiteres Stückgut vom Zuführungstransportmittel auf den Förderer aufzunehmen. Grundsätzlich kann das Zuführungstransportmittel derart angeordnet sein, dass die Stückgüter von einem Inneren des Rundkurses - also von dem durch den Rundkurs umschlossenen Bereich - auf die Förderer zugeführt werden. Alternativ und bevorzugt ist allerdings vorgesehen, dass die Stückgüter von Außerhalb des vom Rundkurs umschlossenen Bereichs auf den Förderer zugeführt werden. Das Zuführungstransportmittel ist also bevorzugt neben dem Rundkurs und nicht innerhalb des Rundkurses angeordnet.

In Zusammenhang mit dem Zuführungstransportmittel kann in einer bevorzugten Weiterbildung der Erfindung vorgesehen sein, dass das Zuführungstransportmittel zum Herstellen eines für jeden Förderer individuellen Zuführungsstückgutstroms ausgestaltet ist. In anderen Worten weist in dieser Alternative also bevorzugt jeder Förderer einen eigenen Zuführungsstückgutstrom auf. Beispielsweise kann sich ein Haupt-Zuführungsstückgutstrom in Unter-Zuführungsstückgutströme aufteilen, wobei die Unter-Zuführungsstückgutströme jeweils die Stückgüter auf einen in einer Ebene angeordneten Förderer zuführen. Derart weist also jeder Förderer bevorzugt eine eigenen Zuführungsstückgutstrom auf. Beispielsweise kann sich das Zuführungstransportmittel je nach Anzahl an übereinander angeordneten Förderern aufgabeln. Dies hat den Vorteil, dass auf Verbindungen, um Stückgüter zwischen den übereinander angeordneten Förderern transportieren zu können, grundsätzlich verzichtet werden kann.

In einer alternativen bevorzugten Weiterbildung der Erfindung ist vorgesehen, dass das Zuführungstransportmittel zum Herstellen eines Zuführungsstückgutstroms zu genau einem und bevorzugt zu einem untersten oder zu einem obersten Förderer ausgestaltet ist. Dies weist den Vorteil auf, dass der Zuführungsstückgutstrom nicht in Unter-Zuführungsstückgutströme aufgeteilt werden muss und/oder dass sich das Zuführungstransportmittel nicht aufgabelt. Somit ist der Platzbedarf der Sortiervorrichtung in dieser Ausgestaltung sehr gering. Zudem hat die Weiterbildung des Zuführungstransportmittels, dahingehend, dass ein Zuführungsstückgutstroms zu dem untersten Förderer hergestellt wird, den Vorteil, dass das Zuführungstransportmittel keine Steigung aufweist. Somit vereinfacht sich der Aufbau des Zuführungstransportmittels und/oder der Sortiervorrichtung.

Gemäß einer weiteren bevorzugten Weiterbildung der Erfindung umfasst das Zuführungstransportmittel ein Bandförderer, Spiralförderer, Steigbandförderer und/oder Höhenförderer. Bevorzugt ist das Zuführungstransportmittel als Bandförderer ausgestaltet und dazu ausgebildet einen Zuführungsstückgutstroms zu dem untersten Förderer herzustellen. Alternativ ist bevorzugt vorgesehen, dass das Zuführungstransportmittel ein Spiralförderer, Steigbandförderer und/oder Höhenförderer umfasst und dazu ausgebildet ist, einen Zuführungsstückgutstroms zu einem der höherliegenden übereinander angeordneten Förderer herzustellen. In anderen Worten ist also zum Überwinden der Steigung, die vorhanden ist, wenn mittels des Zuführungstransportmittels ein Zuführungsstückgutstrom zu einem höherliegenden Förderer hergestellt werden soll, vorgesehen, dass ein Spiralförderer, Steigbandförderer oder Höhenförderer verwendet wird.

Bei einem Steigbandförderer wird das Stückgut auf einer geraden, geneigten Strecke auf die gewünschte Höhe befördert. Bei einem Spiralförderer wird das Stückgut hingegen auf einer Spiralbahn auf die gewünschte Höhe befördert. Dies hat den Vorteil, dass der Platzbedarf in Bezug zur Standfläche geringer ist. Bei einem Höhenförderer - auch Senkrechtförderer oder Vertikalförderer genannt - wird das Stückgut senkrecht nach oben bewegt. Dies spart ebenfalls Platz.

Insbesondere wenn nicht zu jedem der übereinander angeordneten Förderer mittels des Zuführungstransportmittels ein individueller Zuführungsstückgutstroms hergestellt wird, ist gemäß einer weiteren bevorzugten Weiterbildung der Erfindung vorgesehen, dass die Sortiervorrichtung ein aktives oder passives Transportmittel zum Herstellen eines Stückgutstroms zwischen den mehreren übereinander angeordneten Förderern umfasst. Weiter bevorzugt ist aus Geschwindigkeits- und Zuverlässigkeitsgründen bevorzugt vorgesehen, dass die Sortiervorrichtung das aktive Transportmittel umfasst.

Gemäß einer weiteren bevorzugten Weiterbildung der Erfindung ist vorgesehen, dass das Transportmittel in einem vom Rundkurs der Förderer umschlossenen Bereich angeordnet ist. Im Gegensatz zum Zuführungstransportmittel, das bevorzugt neben dem Rundkurs angeordnet ist, ist also vorgesehen, dass das Transportmittel zum Herstellen des Stückgutstroms zwischen den mehreren übereinander angeordneten Förderern innerhalb des Rundkurses angeordnet ist. Dies spart Platz, das derart auch der Raum innerhalb des Rundkurses genutzt wird.

Im Hinblick auf das Transportmittel zum Herstellen des Stückgutstroms zwischen den mehreren übereinander angeordneten Förderern kann vorgesehen sein, dass jeder Förderer mit jedem Förderer mittels eines Transportmittels verbunden ist. Bei vier übereinander angeordneten Förderern würden derart sechs Transportmittel notwendig sein. Alternativ und bevorzugt ist allerdings vorgesehen, dass die Transportmittel derart ausgestaltet sind, dass der Stückgutstrom zwischen den mehreren übereinander angeordneten Förderern nicht in mehrere Stückgutströme aufgespalten wird. Dies hat den Vorteil, dass keine Kollisionskontrolle notwendig wird. Abgesehen von einem ersten Förderer, der bevorzugt mit dem Zuführungstransportmittel und einem Transportmittel verbunden ist und einem letzten Förderer, der lediglich mit einem Transportmittel verbunden ist, sind bevorzugt alle Förderer mit zwei Transportmitteln verbunden. Ein erstes der zwei Transportmittel führt die Stückgüter dem Förderer jeweils zu und das zweite führt die Stückgüter von dem Förderer jeweils ab. Derart wird also das Betreiben der Sortiervorrichtung vereinfacht, da der Stückgutstrom innerhalb der Ebenen der übereinander angeordneten Förderer nicht aufgespalten und wieder zusammengeführt wird, sondern die Stückgüter die Förderer in festgelegter Reihenfolge durchlaufen, bis sie bei ihrer entsprechenden Endstelle in die Endstelle ausgeschleust werden, wodurch eine Kollisionskontrolle zwischen den Stückgütern überflüssig wird. Denn ein Stückgut, das sich auf einem Förderer in einer Ebene befindet ist spätestens nach Durchlaufen des Rundkurses des Förderers in die entsprechende Endstelle ausgeschleust oder von dem Transportmittel auf einen anderen der übereinander angeordneten Förderer bewegt worden. Somit ist auf dem Förderer auch immer Platz um ein Stückgut von dem Zuführungstransportmittel aufzunehmen.

Bevorzugt ist in diesem Zusammenhang zudem vorgesehen, dass jeweils genau zwischen zwei benachbarten der übereinander angeordneten Förderern ein Stückgutstrom hergestellt wird. In anderen Worten wird also bevorzugt auf Transportmittel zum Herstellen eines Stückgutstroms zwischen zwei nicht benachbarten Förderern verzichtet. Derart brauch das Transportmittel nicht unnötig lange Strecken zu überwinden, was sich positiv auf die Transportzeit und somit die Sortiergeschwindigkeit auswirkt.

In Bezug zum passiven Transportmittel ist gemäß einer weiteren bevorzugten Weiterbildung der Erfindung vorgesehen, dass das passive Transportmittel eine Rutsche umfasst. In diesem Zusammenhang ist zudem bevorzugt vorgesehen, dass das Zuführungstransportmittel einen Zuführungsstückgutstrom zum höchstgelegenen Förderer herstellt. Der Transport der Stückgüter zwischen den Förderern erfolgt dann bevorzugt mittels Schwerkraft.

In Bezug zum aktiven Transportmittel ist gemäß einer weiteren bevorzugten Weiterbildung der Erfindung vorgesehen, dass das aktive Transportmittel eine Fördereinrichtung umfasst und bevorzugt einen Spiralförderer, einen Steigbandförderer und/oder einen Höhenförderer umfasst. Bevorzugt verknüpft das aktive Transportmittel einen Förderer auf einer bestimmten Ebene mit einem Förderer auf einer anderen Ebene. In Bezug zum Steigbandförderer kann weiter bevorzugt vorgesehen sein, dass sich der Steigbandförderer im Inneren des Rundkurses quer durch den vom Rundkurs eingeschlossenen Bereich erstreckt, also in anderen Worten von einem Punkt an einem Förderer zu einem gegenüberliegenden Punkt an einem anderen der übereinander angeordneten Förderer führt. Dies hat den Vorteil, dass aktive Transportmittel sehr kurz ist und derart eine schnelle Beförderung der Stückgüter von einem Förderer in einen anderen der übereinander angeordneten Förderer ermöglicht wird. In Bezug zum Spiralförderer kann weiter bevorzugt vorgesehen sein, dass sich der Spiralförderer an der Innenseite des Rundkurses entlang erstreckt. Dies hat den Vorteil, dass die Steigung des Spiralförderers sehr gering gewählt sein kann, wodurch ein sicherer Transport der Stückgüter mit dem aktiven Transportmittel ermöglicht wird.

Wie bereits erwähnt sind die Endstellen entlang der Förderer angeordnet. Bevorzugt sind die Endstellen derart entlang der Förderer angeordnet, dass durch Bewegung der Stückgüter senkrecht zur Förderrichtung des Rundkurses die Stückgüter in die Endstellen ausschleusbar sind. In anderen Worten sind die Endstellen also direkt bei den Förderern angeordnet.

Grundsätzlich können die Endstellen in dem vom Rundkurs des Förderers umschlossen Bereich angeordnet sein, oder in anderen Worten entlang eines Innenrandes des Rundkureses des Förderers angeordnet sein. Alternativ ist gemäß einer bevorzugten Weiterbildung allerdings vorgesehen, dass die Endstellen entlang eines äußeren Randes des Rundkurses der Förderer angeordnet sind. Derart ist der Zugang zu den Endstellen stark vereinfacht, da die Endstellen von Außerhalb zugänglich sind. Die Endstellen können also jederzeit manuell geleert werden. Zudem werden die übereinander angeordneten Förderer von den Endstellen nach außen abgeschirmt, was für die Arbeitssicherheit von Vorteil ist.

Gemäß einer weiteren bevorzugten Weiterbildung der Erfindung sind die Endstellen hohlzylinderartig um die Förderer angeordnet. Die Endstellen bilden also quasi einen mehrstöckigen Turm, in dessen Inneren sich die übereinander angeordneten Förderer befinden, deren Rundkurs bevorzugt als Kreisbahn ausgestaltet ist. Die Endstellen sind weiter bevorzugt in einem gleichmäßigen Raster mit Zeilen und Spalten angeordnet. Derart kann mittels sehr geringen Platzbedarfes eine Vielzahl an Endstellen untergebracht werden. Die Endstellen werden bevorzugt von der Innenseite mittels der Förderer mit den jeweiligen Stückgütern gefüllt und sind zudem einfach von der Außenseite zwecks Entnahme der Stückgüter zugänglich. Die Regelmäßigkeit der Anordnung der Endstellen ermöglicht zudem mehrere Stückgüter zeitgleich in ihre jeweilige Endstelle zu befördern.

In Zusammenhang mit den Endstellen ist gemäß einer weiteren bevorzugten Weiterbildung der Erfindung zudem vorgesehen, dass die Endstellen Behälter umfassen. Besonders von Vorteil ist es, bei den Endstellen die Stückgüter in Behältern zu sammeln. Bevorzugt sind die Mehrzahl an Endstellen als Regale mit bevorzugt eingehängten Behältern ausgestaltet. Derart können die in den Behältern gesammelten Stückgütern zusammen mit dem jeweiligen Behälter aus dem Regal entnommen werden.

Gemäß einer weiteren bevorzugten Weiterbildung der Erfindung ist vorgesehen, dass die Sortiervorrichtung und/oder die Endstellen zur Füllstandsmessung an den Endstellen ausgestaltet sind. Beispielsweise können die Endstellen und/oder die Behälter mit einem Sensor ausgestaltet sein, der den Füllstand der Endstelle und/oder des Behälters erfasst. Der Sensor kann beispielsweise als Lichtschranke ausgestaltet sein. Alternativ kann eine Füllstandsmessung über die Zählung der in eine jeweilige Endstelle ausgeschleusten Stückgüter erfolgen.

Bevorzugt sind als voll erkannte Behälter automatisiert durch leere Behälter auswechselbar. Diesbezüglich ist gemäß einer weiteren bevorzugten Weiterbildung der Erfindung vorgesehen, dass die Sortiervorrichtung und/oder die Endstellen zum automatischen Austausch und/oder Nachrücken von Behältern an den Endstellen ausgestaltet sind. Besonders bevorzugt sind die Behälter in den Regalen radial verschiebbar. Beispielsweise kann vorgesehen sein, dass als voll erkannte Behälter automatisch im Regal radial nach außen verrückt werden, wodurch temporär eine Endstelle ohne Behälter vorliegt. Zudem können leere Behälter im Inneren des Rundkurses angeordnet sein und bei einem als voll erkannten Behälter mittels der Förderer an die entsprechende behälterlose Endstelle befördert werden, um dort in das Regal eingefügt zu werden. Alternativ kann bei den Endstellen jeweils ein Stapel an Behältern vorgehalten werden, so dass ein als voll erkannter Behälter direkt durch einen darunterliegenden Behälter ersetzbar ist.

Gemäß einer weiteren bevorzugten Weiterbildung der Erfindung ist zudem vorgesehen, dass die Sortiervorrichtung einen bevorzugt am Zuführungstransportmittel angeordneten Scanner zum Erfassen einer stückgutbezogenen Sortierinformation des Stückgutes umfasst. In anderen Worten werden bevorzugt mittels des Scanners eine Lieferadresse, ein Barcode oder eine andere stückgutbezogenen Sortierinformation des Stückgutes erfasst, und zwar bevorzugt bevor die Stückgüter die übereinander angeordneten Förderer erreicht haben. Besonders bevorzugt befindet sich der Scanner an dem Zuführungstransportmittel, vor einer potentiellen Aufgabelung des Zuführungstransportmittels.

Gemäß einer weiteren bevorzugten Weiterbildung der Erfindung ist vorgesehen, dass die Sortiervorrichtung eine Recheneinheit zum Steuern des Stückgutstroms der Sortiervorrichtung unter Berücksichtigung der stückgutbezogenen Sortierinformation der jeweiligen Stückgüter umfasst. In anderen Worten ist also bevorzugt vorgesehen, dass der Scanner die Stückgüter scannt und derart die stückgutbezogenen Sortierinformation - wie beispielsweise eine Lieferadresse oder ein Barcode - erfasst wird. Die Recheneinheit ordnet anhand der stückgutbezogenen Sortierinformation das Sortierziel - sprich die entsprechende Endstelle - zu, und steuert dann die Sortiervorrichtung bevorzugt derart, dass das Stückgut in die dem Stückgut entsprechende Endstelle sortiert wird. In anderen Worten erkennt die Sortiervorrichtung also aufgrund der stückgutbezogenen Sortierinformation an welche Endstelle das Stückgut transportiert werden muss, und erkennt somit auch auf welche Ebene der übereinander angeordneten Förderer das Stückgut transportiert werden muss.

In diesem Zusammenhang ist weiter bevorzugt vorgesehen, dass die Endstellen derart angeordnet sind, dass dem Zuführungstransportmittel nächstgelegene Endstellen den statistisch häufigsten Sortierzielen entsprechen. Wenn also beispielsweise das Zuführungstransportmittel lediglich zum untersten der übereinander angeordneten Förderer einen Zuführungsstückgutstroms herstellt, ist bevorzugt vorgesehen, dass die statistisch am häufigsten vorkommenden Sortierziele den um den untersten Förderer angeordneten Endstellen entsprechen. Dadurch werden unnötige Beförderungen der Stückgüter in höherliegende Förderer vermieden.

Gemäß einer weiteren bevorzugten Weiterbildung der Erfindung ist vorgesehen, dass die Förderer dazu ausgestaltet sind, eine kontinuierliche oder eine diskontinuierliche Bewegung in Förderrichtung des Rundkurses auszuführen. Eine kontinuierliche Bewegung weist den Vorteil auf, dass eine hohe Geschwindigkeit erreicht werden kann, wodurch eine hohe Sortierleistung möglich ist. Alternativ ist möglich, dass sich die Förderer diskontinuierlich, vergleichbar mit der Bewegung eines Sekundenzeigers einer Uhr, bewegen. Somit weist die Sortiervorrichtung eine hohe Flexibilität auf, da sie an unterschiedliche Anforderungen der Stückgüter anpassbar ist.

Gemäß einer weiteren bevorzugten Weiterbildung der Erfindung ist vorgesehen, dass die Sortiervorrichtung mobil ausgestaltet ist. Die Sortiervorrichtung ist also bevorzugt nicht an einen festen Standort gebunden, sondern kann beispielsweise mittels Rollen an unterschiedlichen Orten eingesetzt werden. Dies erlaubt eine hohe Flexibilität.

Die Sortiervorrichtung ist weiterhin bevorzugt für eine lose Zuführung der Stückgüter eingerichtet. Die Stückgüter werden bevorzugt also nicht in zusätzlichen Behältnissen auf den Förderern, dem Zuführungstransportmittel und/oder dem aktiven oder passiven Transportmittel transportiert, sondern lose.

Die Aufgabe wird zudem durch Verwendung der obigen Sortiervorrichtung zum Sortieren von Stückgütern in Endstellen gelöst. Bevorzugt ist dabei vorgesehen, dass die Förderer eine kontinuierliche oder diskontinuierliche Bewegung der Stückgüter in Förderrichtung des Rundkurses hervorrufen und/oder dass die Stückgüter mittels eines Zuführungstransportmittels lose auf die Förderer zugeführt werden.

Ein Aspekt liegt also darin, dass die Förderer und besonders bevorzugt die Kreisförderer, eine kontinuierliche oder diskontinuierliche Bewegung der Stückgüter in Förderrichtung - also bevorzugt in tangentiale Richtung - hervorrufen können. Derart wird zum Sortieren ein Stückgutstrom bereitgestellt, was weitaus effizienter ist, als eine manuelle Sortierung oder eine Sortierung mittels Roboterarm. Bevorzugt können in anderen Worten die Kreisförderer die Stückgüter mit einer kontinuierlichen Bewegung im Kreis fördern oder alternativ mit einer diskontinuierlichen Bewegung, vergleichbar mit der Bewegung eines Sekundenzeigers einer Uhr.

Zudem ist bevorzugt vorgesehen, dass die Stückgüter mittels des Zuführungstransportmittels lose auf die Förderer zugeführt werden. Besonders bevorzugt werden die Stückgüter ausschließlich lose zugeführt. Dies ermöglicht, Kosten zu sparen da nicht zusätzliche Behältnisse verwendet werden müssen.

Weitere Merkmale und Vorteile der Verwendung leiten sich dem Fachmann aus der Beschreibung der Sortiervorrichtung ab.

### Kurze Beschreibung der Zeichnungen

Nachfolgend wird die Erfindung unter Bezugnahme auf die anliegenden Zeichnungen anhand von bevorzugten Ausführungsbeispielen näher erläutert.

In den Zeichnungen zeigt
- Fig. 1: eine schematische Ansicht einer Sortiervorrichtung zum Sortieren von Stückgütern in Endstellen, gemäß einem bevorzugten Ausführungsbeispiel der Erfindung,
- Fig. 2: eine detaillierte Darstellung einer Ebene der Sortiervorrichtung aus Figur 1 von oben, und
- Fig. 3 bis 5: jeweils eine schematische Ansicht einer Sortiervorrichtungen, gemäß weiteren bevorzugten Ausführungsbeispielen der Erfindung.

### Detaillierte Beschreibung der Ausführungsbespiele

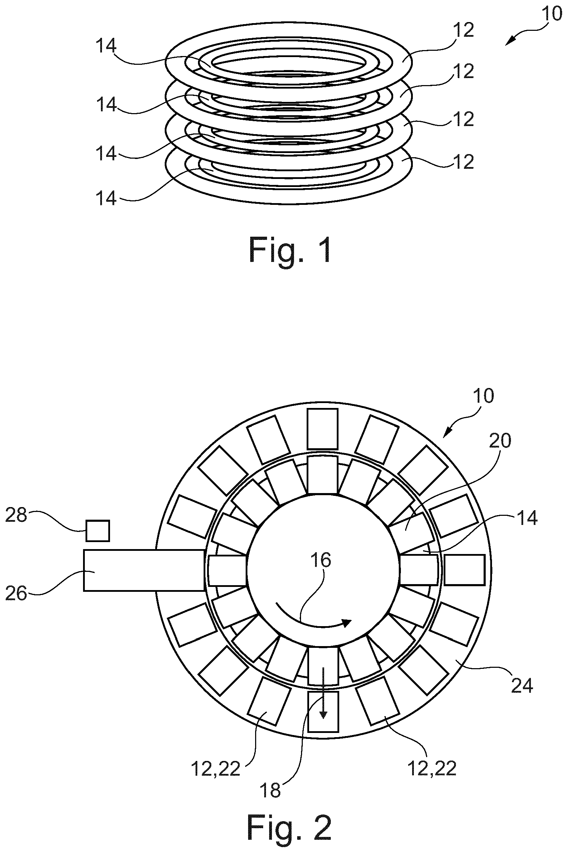

Figur 1 zeigt eine schematische Ansicht einer Sortiervorrichtung 10 zum Sortieren von Stückgütern in Endstellen 12. Die Sortiervorrichtung 10 umfasst mehrere übereinander angeordnete horizontale Förderer 14 zum Fördern der Stückgüter in einem Rundkurs, und die mehreren Endstellen 12, wobei die Endstellen 12 entlang der Förderer 14 angeordnet sind. Im vorliegenden Ausführungsbeispiel umfasst die Sortiervorrichtung 10 vier übereinander angeordnete Kreisförderer 14, wobei die Kreisförderer 14 deckungsgleich übereinander angeordnet sind. Die Endstellen 12 befinden sich entlang eines äußeren Randes des kreisförmigen Rundkurses der Kreisförderer 14 und sind holzylinderartig um die Kreisförderer 14 angeordnet.

Mit Bezugnahme zu Figur 2, die eine detaillierte Ansicht einer Ebene der Sortiervorrichtung 10 von Figur 1 zeigt, ist zu erkennen, dass die Kreisförderer 14 dazu ausgestaltet sind, die Stückgüter entlang des Rundkurses in eine Förderrichtung 16 zu fördern und die Stückgüter senkrecht zur Förderrichtung des Rundkurses 16 - also in radialer Richtung 18 - zu bewegen. Der Kreisförderer 14 ist vorliegend als Quergurtsorter 14 ausgestaltet und weist als Ausschleuseinheiten 20 Quergurte auf, um die Stückgüter in die Endstelle 12 auszuschleusen. Die Endstellen 12 sind regelmäßig um den Kreisfördere 14 angeordnet und weisen Behälter 22 auf, die in einem Regal 24 um die Kreisförderer 14 eingehängt sind.

Zudem weist die Sortiervorrichtung 10 ein Zuführungstransportmittel 26 zum Herstellen eines Zuführungsstückgutstroms zu dem Kreisförderer 14 auf. Vorliegend handelt es sich um ein Fließband 26. Am Zuführungstransportmittel 26 ist zudem ein kommunikationstechnisch mit einer Recheneinheit (nicht gezeigt) verbundener Scanner 28 angeordnet, um eine stückgutbezogenen Sortierinformation des Stückgutes zu erfassen.

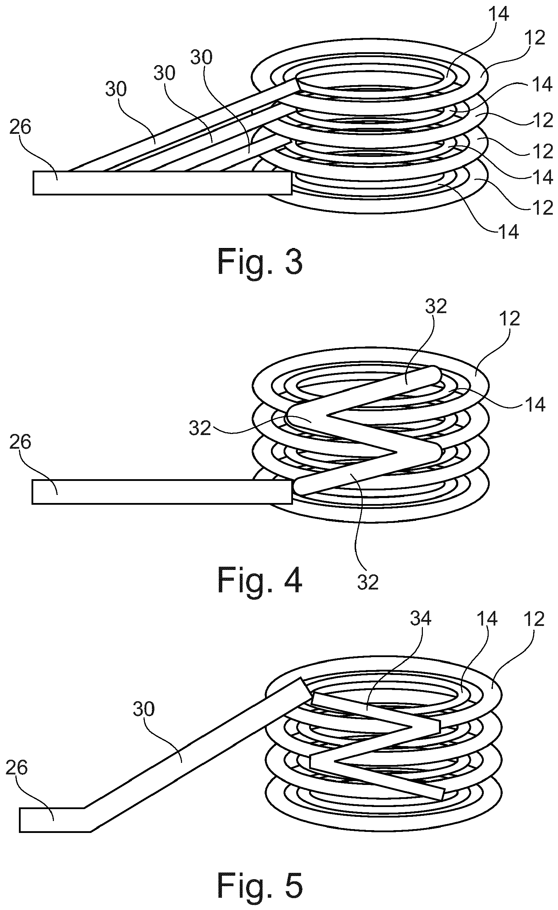

Die Figuren 3 bis 5 zeigen schematische Ansichten von Sortiervorrichtungen 10, gemäß weiteren bevorzugten Ausführungsbeispielen der Erfindung. In allen drei Ausführungsbeispielen weist die Sortiervorrichtungen 10 analog zum Ausführungsbeispiel in Figur 1 vier übereinander angeordnete Kreisförderer 14 und die Mehrzahl an Endstellen 12 auf, wobei die Endstellen 12 hohlzylinderartig um die Kreisförderer 14 angeordnet sind.

Im in Figur 3 gezeigten Ausführungsbeispiel ist das Zuführungstransportmittel 26 zum Herstellen eines für jeden Kreisförderer 14 individuellen Zuführungsstückgutstroms ausgestaltet. Dafür gabelt sich das Zuführungstransportmittel 26 neben den übereinander angeordneten Kreisfördern 14 auf, so dass jeder Kreisförderer 14 mit einem eigenen Zweig des Zuführungstransportmittels 26 ausgestattet ist. In Figur 3 ist zudem zu erkennen, dass das Zuführungstransportmittels 26 Steigbandförderer 30 zum Überwinden der Höhendifferenz umfasst, um derart die höhergelegenen Kreisförderer 14 zu bedienen. Als Alternative zu den Steigbandförderern 30 kämen auch in Figur 3 nicht gezeigte Spiralförderer in Frage.

Im in Figur 4 gezeigten Ausführungsbeispiel ist das Zuführungstransportmittel 26 zum Herstellen eines Zuführungsstückgutstroms zu genau einem und zwar zu dem untersten Kreisförderer 14 ausgestaltet. Weiterhin weist die Sortiervorrichtung 10 im Inneren der Kreisförderer 14 ein aktives Transportmittel 32 zum Herstellen eines Stückgutstroms zwischen den mehreren übereinander angeordneten Kreisförderern 14 auf. Das aktive Transportmittel 32 ist vorliegend in dem in Figur 4 gezeigten Ausführungsbeispiel als Steigbandförderer 32 ausgestaltet. Es werden drei Steigbandförderer 32 verwendet, um die Kreisförderern 14, die direkt benachbart zueinander sind, zu verbinden. Die Steigbandförderer 32 erstrecken sich quer durch den von den Kreisförderern 14 eingeschlossenen Raum, und verbinden einen Punkt bei einem Kreisförderer 14 mit einem gegenüberliegenden Punkt bei einem benachbarten Kreisförderer 14. Als Alternative zu den Steigbandförderern 32 könnte auch ein in Figur 4 nicht gezeigter Spiralförderer im Inneren der Kreisförderer 14 verwendet werden.

Im in Figur 5 gezeigten Ausführungsbeispiel ist das Zuführungstransportmittel 26 analog zu Figur 4 zum Herstellen eines Zuführungsstückgutstroms zu genau einem Kreisförderer 14 ausgestaltet, vorliegend aber zu dem obersten der Kreisförderer 14. Dafür umfasst das Zuführungstransportmittel 26 einen Steigbandförderer 30. Zudem weist die Sortiervorrichtung 10 im Inneren der Kreisförderer 14 ein passives Transportmittel 34 zum Herstellen eines Stückgutstroms zwischen den mehreren übereinander angeordneten Kreisförderern 14 auf. Das passive Transportmittel 34 ist vorliegend als Rutsche 34 ausgestaltet. Es werden drei Rutschen 34 verwendet, um die Kreisförderern 14, die direkt benachbart zueinander sind, zu verbinden. Analog zu den Steigbandförderern 32 in Figur 4 erstrecken sich die Rutschen 34 quer durch den von den Kreisförderern 14 eingeschlossenen Raum, und verbinden einen Punkt bei einem Kreisförderer 14 mit einem gegenüberliegenden Punkt bei einem benachbarten Kreisförderer 14.

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

| | |
|---|---|
| Sortiervorrichtung | 10 |
| Endstelle | 12 |
| Förderer, Kreisförderer, Quergurtsorter | 14 |
| Förderrichtung | 16 |
| Richtung senkrecht zur Förderrichtung, Radialrichtung | 18 |
| Ausschleuseinheit | 20 |
| Behälter | 22 |
| Regal | 24 |
| Zuführungstransportmittel, Fließband | 26 |
| Scanner | 28 |
| Steigbandförderer | 30 |
| aktives Transportmittel, Steigbandförderer | 32 |
| passives Transportmittel, Rutsche | 34 |

## Patentansprüche

1. Sortiervorrichtung (10) zum Sortieren von Stückgütern in Endstellen (12) umfassend
- mehrere übereinander angeordnete horizontale als Förderbänder ausgestaltete Förderer (14) zum Fördern der Stückgüter in einem Rundkurs, wobei die Förderer (14) dazu ausgestaltet sind, die Stückgüter senkrecht (18) zur Förderrichtung (16) des Rundkurses zu bewegen, und
- mehrere Endstellen (12), wobei die Endstellen (12) entlang der Förderer (14) derart angeordnet sind, dass die Stückgüter durch die Bewegung senkrecht (18) zur Förderrichtung (16) in die Endstellen (12) transportierbar sind,
wobei der Transport der Stückgüter von dem Förderer (14) in die Endstelle (12) lediglich durch den Förderer (14) erfolgt.

2. Sortiervorrichtung (10) nach Anspruch 1, wobei der Rundkurs im Wesentlichen als regelmäßiges Polygon oder als Kreis ausgestaltet ist und/oder wobei die Förderer (14) deckungsgleich übereinander angeordnet sind.

3. Sortiervorrichtung (10) nach einem der vorhergehenden Ansprüche umfassend ein Zuführungstransportmittel (26) zum Herstellen eines Zuführungsstückgutstroms zu wenigstens einem Förderer (14).

4. Sortiervorrichtung (10) nach dem vorhergehenden Anspruch, wobei das Zuführungstransportmittel (26) zum Herstellen eines für jeden Förderer (14) individuellen Zuführungsstückgutstroms ausgestaltet ist, oder wobei das Zuführungstransportmittel (26) zum Herstellen eines Zuführungsstückgutstroms zu genau einem und bevorzugt einem untersten oder zu einem obersten Förderer (14) ausgestaltet ist.

5. Sortiervorrichtung (10) nach Anspruch 2 oder 3, wobei das Zuführungstransportmittel (26) einen Bandförderer, Spiralförderer, Steigbandförderer (30) und/oder Höhenförderer umfasst.

6. Sortiervorrichtung (10) nach einem der vorhergehenden Ansprüche umfassend ein aktives Transportmittel (32) oder passives Transportmittel (34) zum Herstellen eines Stückgutstroms zwischen den mehreren übereinander angeordneten Förderern (14).

7. Sortiervorrichtung (10) nach dem vorhergehenden Anspruch, wobei das Transportmittel (32, 34) in einem vom Rundkurs der Förderer (14) umschlossenen Bereich angeordnet ist.

8. Sortiervorrichtung (10) nach einem der Ansprüche 6 oder 7, wobei das passive Transportmittel (34) eine Rutsche (34) umfasst.

9. Sortiervorrichtung (10) nach einem der Ansprüche 6 bis 8, wobei das aktive Transportmittel (32) eine Fördereinrichtung, bevorzugt einen Spiralförderer, einen Steigbandförderer (32) und/oder einen Höhenförderer umfasst.

10. Sortiervorrichtung (10) nach einem der vorhergehenden Ansprüche, wobei die Endstellen (12) entlang eines äußeren Randes des Rundkurses der Förderer (14) angeordnet sind und/oder wobei die Endstellen (12) hohlzylinderartig um die Förderer (14) angeordnet sind.

11. Sortiervorrichtung (10) nach einem der vorhergehenden Ansprüche, wobei die Endstellen (12) Behälter (22) umfassen und/oder wobei die Sortiervorrichtung (10) und/oder die Endstellen (12) zum automatischen Austausch und/oder Nachrücken von Behältern (22) an den Endstellen (12) ausgestaltet sind.

12. Sortiervorrichtung (10) nach einem der vorhergehenden Ansprüche, wobei die Sortiervorrichtung (10) und/oder die Endstellen (12) zur Füllstandsmessung an den Endstellen (12) ausgestaltet sind.

13. Sortiervorrichtung (10) nach einem der vorhergehenden Ansprüche, umfassend einen bevorzugt am Zuführungstransportmittel (26) angeordneten Scanner (28) zum Erfassen einer stückgutbezogenen Sortierinformation des Stückgutes und/oder eine Recheneinheit zum Steuern des Stückgutstroms der Sortiervorrichtung (10) unter Berücksichtigung der stückgutbezogenen Sortierinformation der jeweiligen Stückgüter.

14. Sortiervorrichtung (10) nach einem der vorhergehenden Ansprüche, wobei die Förderer (14) dazu ausgestaltet sind, eine kontinuierliche oder eine diskontinuierliche Bewegung in Förderrichtung (16) des Rundkurses auszuführen.

15. Verwendung einer Sortiervorrichtung (10) nach einem der vorherigen Ansprüche zum Sortieren von Stückgütern in Endstellen (12).
